# EUROPÄISCHE PATENTANMELDUNG

(11) **EP 1 842 416 A1**
(43) Veröffentlichungstag der Anmeldung: **10.10.2007**
(21) Anmeldenummer: 07007061.0
(22) Anmeldetag: 04.04.2007
(51) Int. Cl.: A01D 46/26

(54) **Vorrichtung zum Pflücken von Oliven**

(30) Priorität: 07.04.2006 DE 102006016481
(71) Anmelder: Toskas, Adonis, 42289 Wuppertal (DE)
(72) Erfinder: Toskas, Adonis, 42289 Wuppertal (DE)
(74) Vertreter: Hauck Patent- und Rechtsanwälte

(57) **Zusammenfassung**

Es wird eine Vorrichtung zum Pflücken bzw. Ernten von Oliven beschrieben. Die Vorrichtung besitzt einen Träger (5), an dem eine drehbare Welle (1,30), auf der in kammförmiger Anordnung mindestens eine Reihe von Zinken (2,22,23,31,32) angeordnet ist, verschwenkbar und/oder drehbar gelagert ist. Die Vorrichtung kann manuell gehandhabt werden oder ein festes oder bewegliches Gestell aufweisen, wobei das Gestell von einem Fahrzeug gebildet werden kann. Mit der Vorrichtung können Oliven unter schonender Behandlung der Bäume auf besonders effiziente Weise gepflückt bzw. geerntet werden.

## Beschreibung

Die vorliegende Erfindung betrifft eine Vorrichtung zum Pflücken von Oliven.

Es sind Olivenpflück- bzw. Olivenerntemaschinen bekannt, bei denen die Äste bzw. Zweige der Olivenbäume geschüttelt werden, um hierdurch die Oliven von den Ästen bzw. Zweigen zu lösen. Die herabfallenden Oliven werden dann beispielsweise mit Hilfe von Netzen aufgefangen. Ferner sind Schlagvorrichtungen bekannt, bei denen die Oliven durch Schlagwirkung von den Ästen bzw. Zweigen abgetrennt werden. Des weiteren ist es bekannt, Oliven mittels eines Luftstrahles von den Bäumen zu entfernen.

Diese bekannten Vorrichtungen besitzen einen relativ komplizierten Aufbau und gewährleisten keine besonders schonende Behandlung des Olivenbaumes beim Entfernen der Oliven. In der Regel gilt, dass die Effizienz einer derartigen Pflückvorrichtung um so größer ist, je stärker auf den Baum eingewirkt wird, so dass es schwierig ist, mit den bekannten Vorrichtungen bei guter Effizienz eine schonende Behandlung der Olivenbäume zu erreichen.

Der vorliegenden Erfindung liegt die Aufgabe zugrunde, eine Vorrichtung zum Pflücken von Oliven zu schaffen, die bei einem einfachen Aufbau und einer schonenden Behandlung des Olivenbaumes eine besonders hohe Effizienz besitzt.

Diese Aufgabe wird erfindungsgemäß durch eine Vorrichtung zum Pflücken von Oliven gelöst, die die folgenden Bestandteile umfasst:
Eine drehbare Welle, auf der in kammförmiger Anordnung mindestens eine Reihe von Zinken angeordnet ist;
einen manuellen oder motorischen Antrieb für die Welle, mit dem diese in Drehungen um ihre Achse versetzbar ist;
ein Drehlager an einem Ende der Welle; und
einen Träger, an dessen einem Ende das Drehlager angeordnet ist, zur manuellen Handhabung oder zur Lagerung auf einem festen oder beweglichen Gestell,
wobei der Winkel zwischen der Wellenachse und der Trägerachse verstellbar ist.

Die erfindungsgemäß ausgebildete Vorrichtung arbeitet mit einer an einem Träger angeordneten Welle, auf der in kammförmiger Anordnung mindestens eine Reihe von Zinken angeordnet ist. Durch Drehen der Welle tritt die Zinkenreihe mit den die Oliven tragenden Zweigen des Olivenbaumes in Kontakt und streift auf diese Weise die Oliven von den Zweigen, die auf den Boden fallen und dort mit Hilfe von geeigneten Einrichtungen, beispielsweise Netzen, aufgefangen werden können. Die Zinken sind nach Art eines Kammes im Abstand voneinander angeordnet, so dass Oliven auch von Zweigen abgestreift werden können, die zwischen benachbarte Zinken geraten sind. Die rotierende Zinkenreihe löst daher die Oliven durch Kontakt der Spitzen der Zinken und der Oberseite und Unterseite der Zinken mit den Zweigen bzw. Oliven, aber auch Kontakt mit den Zweigen bzw. Oliven zwischen benachbarten Zinken. Nach dem Kontakt werden durch die Weiterdrehung der Zinkenreihe die Oliven von den Zweigen abgerissen.

Da die erfindungsgemäß ausgebildete Vorrichtung keine Schüttel- oder Schlagbewegung ausführt, sondern lediglich eine Drehbewegung, ist eine relativ schonende Behandlung der Olivenbäume sichergestellt. Gleichzeitig wird durch die rotierende Welle mit der rotierenden Zinkenreihe eine hohe Effizienz beim Lösen der Oliven von den Bäumen erreicht.

Die erfindungsgemäß ausgebildete Vorrichtung weist einen manuellen oder motorischen Antrieb für die Welle auf, mit dem diese in Drehungen um ihre Achse versetzbar ist. Hierbei kann es sich beispielsweise um einen Elektromotor handeln, dessen Welle in die Welle der Vorrichtung übergeht bzw. diese antreibt.

Die Welle ist über ein Drehlager an einem Ende der Welle gelagert, wobei dieses Drehlager vom Antrieb für die Welle gebildet sein kann. Das Drehlager ermöglicht eine rotatorische Bewegung der mindestens einen Zinkenreihe. Es ist an einem Ende eines Trägers angeordnet, der zur manuellen Handhabung dient oder auf einem festen oder beweglichen Gestell angeordnet ist. Das bewegliche Gestell kann beispielsweise von einem geeigneten Fahrzeug gebildet sein, so dass die erfindungsgemäße Vorrichtung sowohl manuell gehandhabt als auch über ein Fahrzeug betätigt werden kann. Eine Lagerung des Trägers auf einem festen Gestell ist auch möglich.

Ein weiteres Merkmal der Erfindung besteht darin, dass der Winkel zwischen der Wellenachse und der Trägerachse verstellbar ist. Auf diese Weise kann die rotierende Welle mit der Zinkenreihe in beliebige Winkelstellungen relativ zum Träger gebracht werden, so dass in verschiedenen Lagen sämtliche Zweige eines Olivenbaumes erreicht werden können.

Vorzugsweise ist die Welle in Vertikalrichtung relativ zum Träger verschwenkbar und feststellbar. Dabei können Welle und Träger beispielsweise einen Winkel von etwa 90° miteinander bilden, der einer bequemen Arbeitsstellung entspricht. Eine Vergrößerung bzw. Verkleinerung des Winkels ist durch den vorgesehenen Schwenkmechanismus möglich, so dass die Welle vorzugsweise so weit verschwenkt werden kann, bis sie in Fortsetzung der Trägerachse angeordnet ist, und in entgegengesetzter Richtung so weit, bis sie einen minimalen Winkel mit der Trägerachse bildet.

Bei einer weiteren Ausführungsform der Erfindung ist die Welle in Horizontalrichtung um den Träger drehbar und in einer bestimmten Drehstellung fixierbar. Auch hierdurch ist es möglich, eine Anpassung der rotierenden Welle an verschiedene Positionen von Zweigen und Ästen des Olivenbaumes zu erreichen. Vorzugsweise ist die Welle sowohl in Vertikalrichtung als auch in Horizontalrichtung relativ zum Träger verschwenkbar und drehbar angeordnet. Es versteht sich, dass eine Fixierung in den gewünschten Stellungen möglich ist.

Zweckmäßigerweise sind die Zinken der Reihe wie bei einem Kamm in gleichen Abständen voneinander angeordnet. Die Zinken können geradlinig oder gekrümmt ausgebildet sein. Mehrere Zinkenreihen werden bevorzugt, wobei bei einer besonders bevorzugten Ausführungsform auf der Welle drei Reihen von Zinken in gleichen Abständen voneinander angeordnet sind. Hierdurch treten die Oliven an den Zweigen des Olivenbaumes bei einer Umdrehung der Welle mehrfach, in diesem Fall dreifach, mit Zinken in Eingriff, so dass die Beaufschlagung der Zweige verstärkt und der gewünschte Abstreifeffekt erhöht wird. Bei der Ausführungsform mit den drei Zinkenreihen sind somit die Reihen in einem Abstand von 120° voneinander angeordnet.

Ein besonders effizienter Abstreifeffekt wird erreicht, wenn die Zinken in Drehrichtung vorwärts gekrümmt sind.

Eine weitere Ausführungsform der Erfindung sieht vor, dass die Zinken an ihren Enden gespalten, insbesondere V-förmig ausgebildet sind. Diese Ausführungsform ermöglicht ebenfalls eine effiziente Trennung der Oliven von den Zweigen.

Die mindestens eine Zinkenreihe, die auf der Welle angeordnet ist, ist vorzugsweise geradlinig angeordnet, d.h. parallel zur Wellenachse. Eine weitere Ausführungsform der Erfindung zeichnet sich dadurch aus, dass die mindestens eine Zinkenreihe schraubenlinienförmig auf der Welle angeordnet ist, d.h. die Ansatzpunkte der Zinken auf dem Wellenumfang in der Form einer Schraubenlinie um den Umfang herum laufen.

Die Zinken einer Reihe sind vorzugsweise gleich lang ausgebildet. Sie können jedoch auch verschieden lang sein. So wird eine Ausführungsform bevorzugt, bei der die Zinken einer Reihe von beiden Enden aus nach innen kürzer ausgebildet sind. Bei dieser Ausführungsform weist daher die Welle in ihrer Längsmitte kürzere Zinken als in ihren beiden axialen Endbereichen auf.

Eine andere Ausführungsform der Erfindung zeichnet sich dadurch aus, dass sich der Durchmesser der Welle von beiden Enden aus nach innen, d.h. axial zur Mitte hin, verjüngt. Hierbei wird bei gleich langen Zinken ein ähnlicher Effekt erzielt wie bei der vorstehend beschriebenen Ausführungsform, bei der kürzere Zinken im mittleren Bereich der Welle angeordnet sind. Die beiden zuletzt beschriebenen Ausführungsformen der Erfindung ermöglichen eine besonders schonende Kontaktierung von gekrümmten Ästen bzw. Zweigen oder Bäumen, da die Enden der Zinken einer Reihe entlang einer gekrümmten Linie angeordnet sind.

Bei noch einer weiteren Ausführungsform der Erfindung sind die Zinken an ihren Enden hakenförmig ausgebildet. Hierdurch wird die Effizienz beim Lösen der Oliven weiter verbessert.

Noch eine weitere Ausführungsform zeichnet sich dadurch aus, dass zwei gegenüberliegende Zinkenreihen auf der Welle angeordnet sind, die insgesamt S-förmig ausgebildet sind. Beide Zinkenreihen bilden daher zusammen ein S, wobei sich die Welle so dreht, dass die Zinken beider Reihen in Drehrichtung vorwärts gekrümmt sind.

Was die Ausbildung des Trägers anbetrifft, so kann dieser im einfachsten Fall als gerade oder gekrümmte Stange ausgebildet sein, an deren einem Ende das Drehlager für die Welle angeordnet ist. Bei dieser Ausführungsform kann die Winkelverstellung zwischen Träger und Welle auf beliebige Weise erfolgen, beispielsweise über Schwenkzylinder zum Verschwenken der Welle, Drehantriebe zum Drehen der Welle relativ zum Träger etc. Die Erfindung ist hierbei nicht auf bestimmte Ausführungsformen beschränkt, und der Fachmann kann je nach Anwendungsfall eine geeignete Ausführungsform auswählen. Vorzugsweise ist hierbei am Trägerende ein Motor (Elektromotor) angeordnet, der den Antrieb und das Drehlager für die Welle bildet.

Eine andere Ausführungsform der Erfindung zeichnet sich dadurch aus, dass der Träger als Gelenkarm ausgebildet ist, der aus mehreren gelenkig miteinander verbundenen Trägerabschnitten besteht, die beispielsweise über Stellzylinder relativ zueinander verschwenkt werden können. Eine andere Ausführungsform zeichnet sich dadurch aus, dass der Träger als Teleskoparm ausgebildet ist und somit in Längsrichtung ausfahrbar und zurückziehbar ist. Kombinationen beider Ausführungsformen sind möglich. So wird eine Ausführungsform besonders bevorzugt, bei der der Träger im unteren Bereich als Teleskoparm und im oberen Bereich als Gelenkarm ausgebildet ist.

Noch eine andere bevorzugte Ausführungsform der Erfindung ist dadurch gekennzeichnet, dass die Vorrichtung im Abstand von der Welle eine am Träger angebrachte stationäre kammförmige Einrichtung zum Wegbewegen von Ästen und Zweigen aufweist. Mit dieser Einrichtung kann daher ein zum Rotierenlassen der Welle mit der mindestens einen Zinkenreihe benötigter Freiraum geschaffen werden.

Die Erfindung wird nachfolgend anhand von Ausführungsbeispielen in Verbindung mit der Zeichnung im einzelnen erläutert. Es zeigen:
- Figur 1: eine schematische Darstellung einer manuell betätigbaren Vorrichtung zum Pflücken von Oliven in der Seitenansicht;
- Figur 2: eine schematische vergrößerte Darstellung einer Olivenpflückvorrichtung, die im wesentlichen der in Figur 1 gezeigten Vorrichtung entspricht, in der Seitenansicht;
- Figur 3: einen Querschnitt durch eine erste Ausführungsform einer mit Zinken versehenen Welle, die bei der Olivenpflückvorrichtung zum Einsatz kommt;
- Figur 4: einen Querschnitt durch eine zweite Ausführungsform einer mit Zinken versehenen Welle;
- Figur 5: einen Querschnitt durch eine weitere Ausführungsform einer mit Zinken versehenen Welle;
- Figur 6: zwei Seitenansichten noch von weiteren Ausführungsformen von mit Zinken versehenen Wellen;
- Figur 7: eine Seitenansicht einer mit Zinken versehenen Welle, wobei im oberen und unteren Teil zwei verschiedene Ausführungsformen in Bezug auf die Ausbildung und Anordnung der Welle und der Zinken gezeigt sind; und
- Figur 8: eine schematische Teilseitenansicht noch einer anderen Ausführungsform einer Olivenpflückvorrichtung.

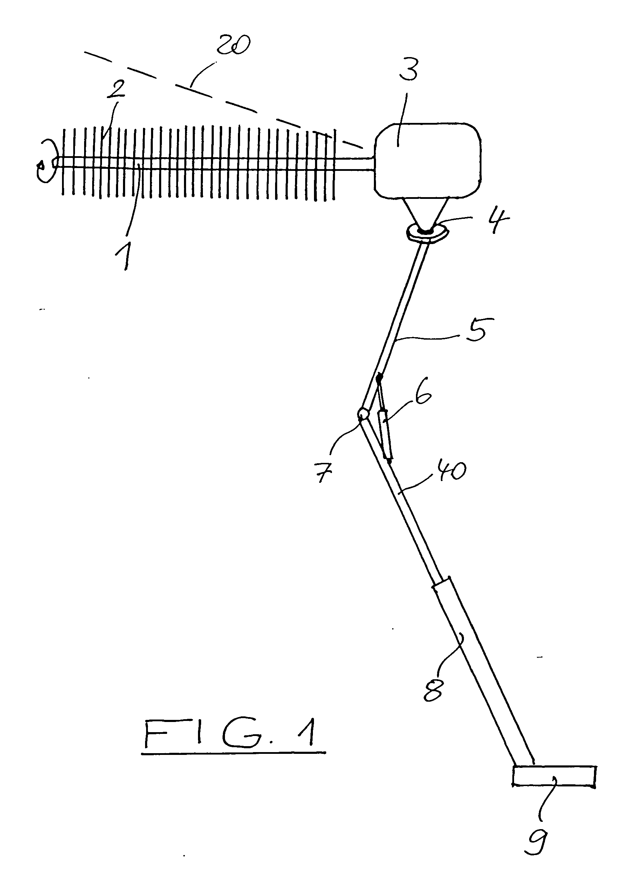

Bei der in Figur 1 dargestellten Ausführungsform einer Olivenpflückvorrichtung handelt es sich um ein manuell handhabbares Gerät, das von einem Benutzer an einem Handgriff 9 ergriffen und gehandhabt werden kann. Am Handgriff 9 sind entsprechende Betätigungselemente (Schalter, Druckknöpfe etc.) für das Gerät vorgesehen, die hier im einzelnen nicht dargestellt sind. Ferner sind am Handgriff oder an anderen Stellen des Gerätes Primärbatterien oder Sekundärbatterien (wiederaufladbare Batterien) untergebracht, die den elektrischen Strom zur Betätigung des Gerätes zur Verfügung stellen. Auch dies ist im einzelnen nicht dargestellt. Ferner sind die entsprechenden stromführenden Leitungen zu den Antrieben (Motoren) nicht dargestellt.

Die in Figur 1 in Seitenansicht schematisch dargestellte Vorrichtung zum Pflücken von Oliven besitzt einen Träger 5, der im unteren Teil als Teleskoparm 8 und im oberen Teil als Gelenkarm 40 ausgebildet ist. Der Gelenkarm weist ein Gelenk 7 auf, das Armabschnitte gelenkig miteinander verbindet. Über einen entsprechenden Stellzylinder 6 können die Armabschnitte relativ zueinander verschwenkt werden.

Der Teleskoparm 8 ist in bekannter Weise ausgebildet und weist ein- und ausfahrbare Armabschnitte auf, so dass die axiale Länge des Trägers 5 vergrößert oder verkleinert werden kann.

Am Ende des letzten Armabschnittes des Gelenkarmes 6 ist eine Erweiterung vorgesehen, auf der ein Drehgelenk 4 angeordnet ist. Mit Hilfe dieses Drehgelenkes 4 kann ein Elektromotor 3 mit einer in Verlängerung seiner Antriebswelle angeordneten Zinkenwelle 1 gedreht werden. Die entsprechenden Antriebseinrichtungen für das Drehgelenk 4 sind nicht dargestellt.

Durch Betätigung des Elektromotors 3 wird die Zinkenwelle 1 in Drehungen versetzt. Diese weist auf ihrem Umfang zwei kammförmig angeordnete Reihen von Zinken 2 auf, die entgegengesetzt zueinander am Umfang der Welle 1 angeordnet sind und in Drehrichtung vorwärts gekrümmt sind. Beide Zinkenreihen bilden daher zusammen im Schnitt etwa ein S. Die Drehrichtung der Welle 1 ist durch den dargestellten Pfeil angedeutet.

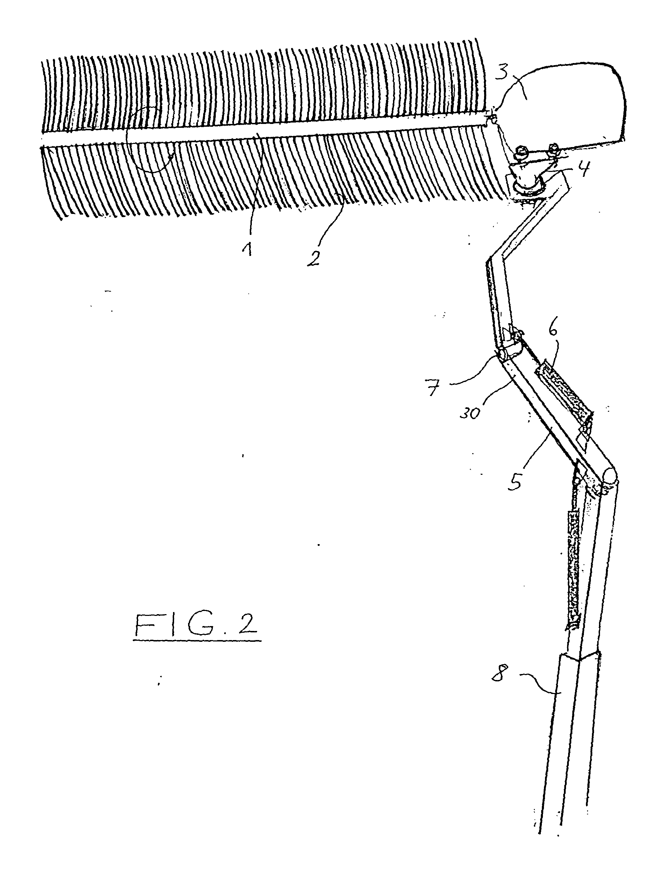

Figur 2 zeigt einen Teil der Vorrichtung der Figur 1 schematisch in größerem Maßstab. Durch Betätigung der Vorrichtung kann der Träger 5 über den Teleskoparm 8 verlängert oder verkürzt werden, kann die Zinkenwelle 1 durch Verschwenken des Gelenkarmes 40 relativ zum Träger in Vertikalrichtung verschwenkt werden (wie bei 20 gezeigt) und kann die Zinkenwelle 1 durch Betätigung des Drehgelenkes 4 in Horizontalrichtung in Bezug auf den Träger gedreht werden. Durch Ein- und Ausschalten der Vorrichtung wird die Zinkenwelle 1 in Drehungen versetzt und gestoppt.

Bei Benutzung der Vorrichtung wird der Träger durch Ausfahren des Teleskoparmes 8 auf eine geeignete Länge gebracht. Ferner wird die Welle durch Verschwenken des Gelenkarmes 30 und/oder durch Betätigung des Drehgelenkes 4 in eine geeignete Winkelstellung zum Träger 5 gebracht. Danach wird die Zinkenwelle 1 in Drehungen versetzt, so dass die beiden Zinkenreihen 2 die Oliven von den Zweigen abstreifen.

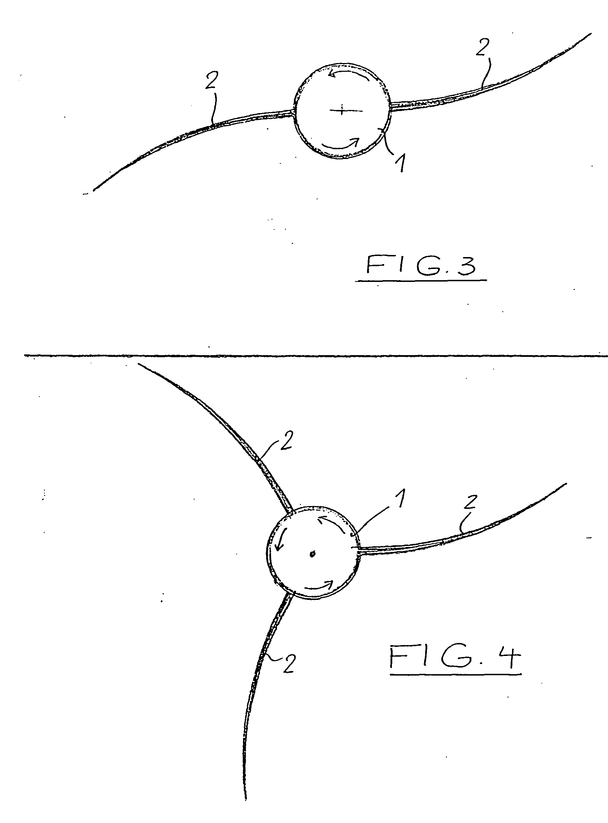

Figur 3 zeigt einen Querschnitt durch die Welle 1 mit den zwei gegenüberliegenden Reihen von Zinken 2. Die Drehrichtung ist durch Pfeile angedeutet. Die Zinken sind, wie bereits erwähnt, in Drehrichtung vorwärts gekrümmt ausgebildet.

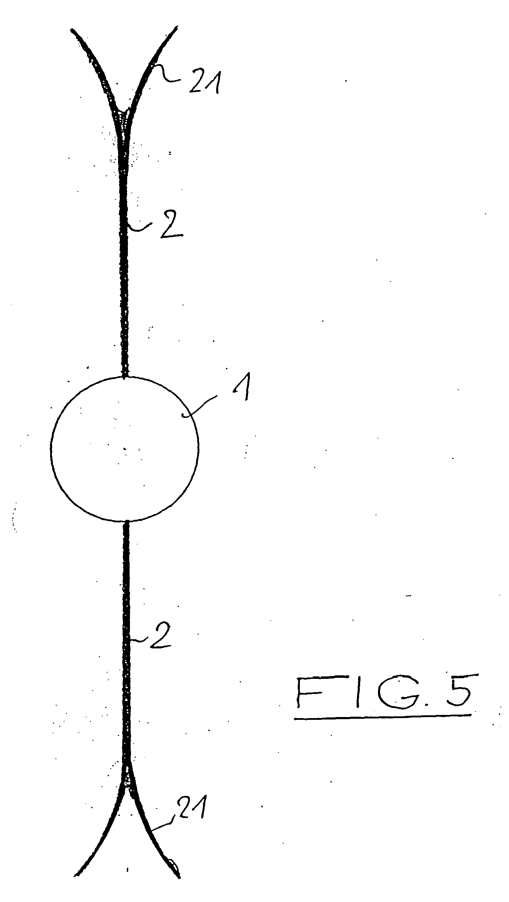

Figur 4 zeigt einen Querschnitt durch eine Welle 1 einer anderen Ausführungsform, die drei Reihen von in Drehrichtung vorwärts gekrümmten Zinken 2 besitzt.

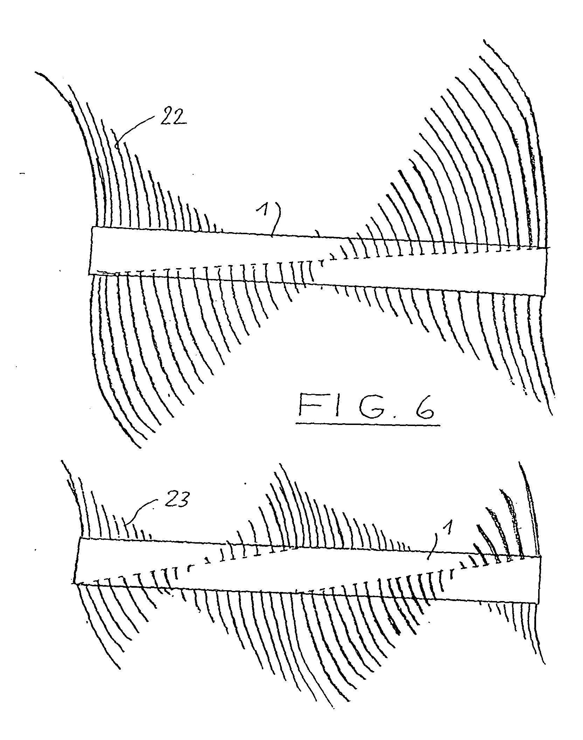

Bei der in Figur 5 im Querschnitt dargestellten Welle 1 sind zwei Reihen von Zinken 2 diametral gegenüberliegend angeordnet. Hierbei sind die Zinken 2 an ihren Enden V-förmig gespalten, so dass sich jeweils zwei gleich gekrümmt nach außen verlaufende Zinkenenden 21 ergeben.

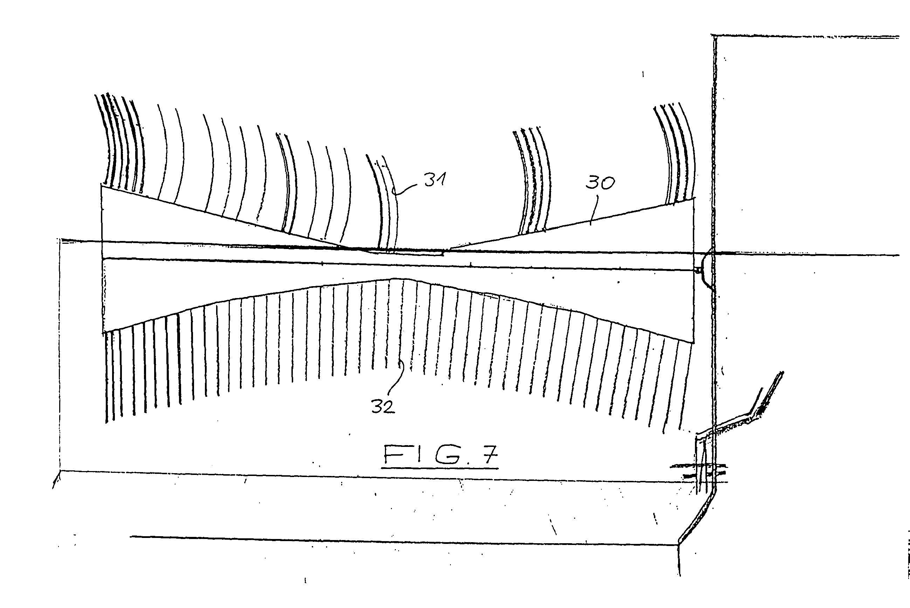

Figur 6 zeigt in der Seitenansicht zwei Ausführungsformen von Wellen 1, bei denen die Zinkenreihen nicht parallel zur Wellenachse angeordnet sind, sondern sich schraubenförmig um die Welle herum erstrecken. Bei der in Figur 6 oben dargestellten Ausführungsform sind hierbei die Zinken 22 der beiden Reihen von außen nach innen kürzer ausgebildet. Bei der unteren Ausführungsform weisen die Zinken 23 der beiden schraubenlinienförmig angeordneten Reihen zwei verkürzte Bereiche jeweils zwischen der Mitte und den beiden Enden der Welle auf.

Figur 7 zeigt schematisch in der Seitenansicht eine Welle 30, die als Doppelkonus ausgebildet ist, d.h. von den beiden Enden zur Mitte hin einen sich verringernden Durchmesser aufweist. Im oberen Bereich besitzt die Welle hierbei im Schnitt eine geradlinige Begrenzungslinie, während die Begrenzungslinie im unteren Bereich gekrümmt ist. Die Welle kann so ausgebildet sein, wie dies im oberen oder im unteren Bereich gezeigt ist.

Im unteren Bereich der Figur 7 besitzt die Welle geradlinige Zinken 32, während sie bei der Darstellung im oberen Bereich gekrümmt ausgebildete Zinken 31 besitzt, welche bei dieser Ausführungsform zum freien Ende der Welle hin gekrümmt sind.

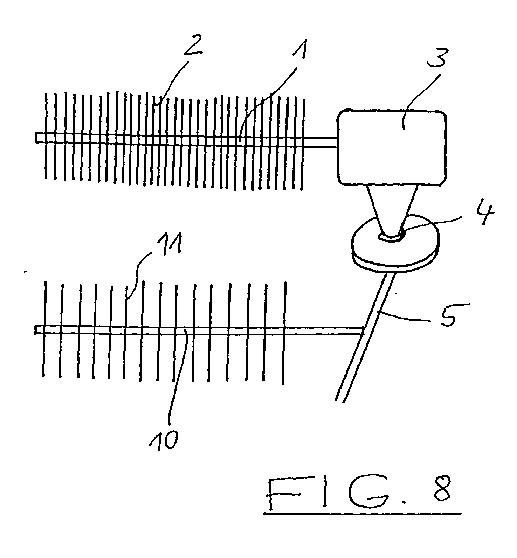

Figur 8 zeigt in schematischer Seitenansicht einen Teil einer weiteren Ausführungsform einer Olivenpflückvorrichtung, bei der zusätzlich zu den vorstehend beschriebenen Ausführungsformen am Träger 5 im Abstand von der Welle 1 eine stationäre kammförmige Einrichtung 10 mit Zinken 11 zum Wegbewegen von Ästen und Zweigen angeordnet ist.

Anstelle der vorstehend beschriebenen manuell handhabbaren Ausführungsformen kann die Vorrichtung auch auf einem geeigneten Fahrzeug angeordnet sein oder selbstverfahrbar ausgebildet sein. Geeignete Ausführungsformen hierfür, wie Fahrgestelle, Lagereinrichtungen, Stützvorrichtungen etc., sind dem Fachmann bekannt und werden an dieser Stelle nicht mehr im einzelnen erläutert. Eine derartige als Fahrzeug ausgebildete Vorrichtung kann beispielsweise eine geeignete Führerkabine aufweisen, in der eine Bedienungsperson sitzt und die entsprechenden Funktionen der Vorrichtung über ein mit Schaltern, Hebeln, Druckknöpfen etc. versehenes Bedienungspult initiieren kann.

Die Dimensionen und Materialien für die Vorrichtung können vom Fachmann in Anpassung an die jeweiligen Anwendungsfälle in geeigneter Weise ausgewählt werden. Beispielsweise kann die Länge der Zinkenwelle 1,5 m betragen. Die Breite der Zinkenwelle über alles kann beispielsweise 0,25 m betragen.

## Patentansprüche

1. Vorrichtung zum Pflücken von Oliven mit
einer drehbaren Welle (1, 30), auf der in kammförmiger Anordnung mindestens eine Reihe von Zinken (2, 22, 23, 31, 32) angeordnet ist;
meinem manuellen oder motorischen Antrieb (3) für die Welle (1, 30), mit dem diese in Drehungen um ihre Achse versetzbar ist;
einem Drehlager an einem Ende der Welle (1, 30); und
einem Träger (5), an dessen einem Ende das Drehlager angeordnet ist, zur manuellen Handhabung oder zur Lagerung auf einem festen oder beweglichen Gestell,
wobei der Winkel zwischen der Wellenachse und der Drehachse verstellbar ist.

2. Vorrichtung nach Anspruch 1, **dadurch gekennzeichnet, dass** die Welle (1, 30) in Vertikalrichtung relativ zum Träger (5) verschwenkbar und feststellbar ist.

3. Vorrichtung nach Anspruch 1 oder 2, **dadurch gekennzeichnet, dass** die Welle (1, 30) in Horizontalrichtung um den Träger (5) drehbar und in einer bestimmten Drehstellung fixierbar ist.

4. Vorrichtung nach einem der vorangehenden Ansprüche, **dadurch gekennzeichnet, dass** auf der Welle (1) drei Reihen von Zinken (2) in gleichen Abständen angeordnet sind.

5. Vorrichtung nach einem der vorangehenden Ansprüche, **dadurch gekennzeichnet, dass** die Zinken (2) an ihren Enden (21) V-förmig ausgebildet sind.

6. Vorrichtung nach einem der vorangehenden Ansprüche, **dadurch gekennzeichnet, dass** die Zinken (2, 22, 23) in Drehrichtung vorwärts gekrümmt sind.

7. Vorrichtung nach einem der vorangehenden Ansprüche, **dadurch gekennzeichnet, dass** die mindestens eine Zinkenreihe schraubenlinienförmig auf der Welle (1) angeordnet ist.

8. Vorrichtung nach einem der vorangehenden Ansprüche, **dadurch gekennzeichnet, dass** die Zinken (22, 23) einer Reihe von beiden Enden aus nach innen kürzer ausgebildet sind.

9. Vorrichtung nach einem der vorangehenden Ansprüche, **dadurch gekennzeichnet, dass** sich der Durchmesser der Welle (30) von beiden Enden aus nach innen verjüngt.

10. Vorrichtung nach einem der vorangehenden Ansprüche, **dadurch gekennzeichnet, dass** die Zinken an ihren Enden hakenförmig ausgebildet sind.

11. Vorrichtung nach einem der vorangehenden Ansprüche, **dadurch gekennzeichnet, dass** zwei gegenüberliegende Zinkenreihen auf der Welle (1) angeordnet sind, die insgesamt S-förmig ausgebildet sind.

12. Vorrichtung nach einem der vorangehenden Ansprüche, **dadurch gekennzeichnet, dass** der Träger (5) als Gelenkarm (40) ausgebildet ist.

13. Vorrichtung nach einem der vorangehenden Ansprüche, **dadurch gekennzeichnet, dass** der Träger (5) als Teleskoparm (8) ausgebildet ist.

14. Vorrichtung nach einem der vorangehenden Ansprüche, **dadurch gekennzeichnet, dass** am Trägerende ein Motor (3) angeordnet ist, der den Antrieb und das Drehlager für die Welle (1) bildet.

15. Vorrichtung nach einem der vorangehenden Ansprüche, **dadurch gekennzeichnet, dass** das bewegliche Gestell von einem Fahrzeug gebildet ist.

16. Vorrichtung nach einem der vorangehenden Ansprüche, **dadurch gekennzeichnet, dass** sie im Abstand von der Welle (1) am Träger (5) eine stationäre kammförmige Einrichtung (10) zum Wegbewegen von Ästen und Zweigen aufweist.
